# EUROPEAN PATENT SPECIFICATION

(11) **EP 2 362 934 B1**
(45) Date of publication and mention of the grant of the patent: **30.01.2013**
(21) Application number: 09804311.0
(22) Date of filing: 23.11.2009
(51) Int. Cl.: F28D 7/10, F28D 7/14, F28F 9/02

(54) **HEAT EXCHANGER WITH AN IMPROVED CONNECTOR FOR AN AIR CONDITIONING CIRCUIT OF A MOTOR VEHICLE**
WÄRMETAUSCHER MIT EINEM VERBESSERTEN VERBINDER FÜR EINEN KLIMAANLAGENKREISLAUF EINES KRAFTFAHRZEUGS
ÉCHANGEUR THERMIQUE ÉQUIPÉ D UN RACCORD AMÉLIORÉ POUR UN CIRCUIT DE CONDITIONNEMENT D AIR D UN VÉHICULE À MOTEUR

(30) Priority: 24.11.2008 IT TO20080866
(43) Date of publication of application: 07.09.2011
(73) Proprietor: DYTECH - Dynamic Fluid Technologies S.p.A., 10123 Torino (IT)
(72) Inventor: ZANARDI, Mariofelice, I-10123 Torino (IT)
(74) Representative: Mola, Edoardo
(86) International application number: PCT/IB2009/007538
(87) International publication number: WO 2010/058286

(56) References cited:
- EP-A- 1 762 806
- DE-A1- 10 059 911
- DE-A1- 10 339 638
- DE-A1-102004 004 027
- DE-A1-102007 054 732
- US-A- 4 765 658
- US-A- 5 154 451
- US-A- 5 593 187
- US-A1- 2002 046 830
- C. OTTO GEHRCKENS GMBH & CO. KG: 'Das O-Ring 1x1', [Online] 15 February 2011, Retrieved from the Internet: <URL:http://www.cog.de/fileadmin/downloads/ COG_O-Ring_1x1_DE.pdf> [retrieved on 2012-06-06]

## Description

### TECHNICAL FIELD

The present invention relates to a heat exchanger for an air conditioning circuit of a motor vehicle, in particular to a connecting system between a radiating body of the heat exchanger and the inlet and outlet ducts of the air conditioning circuit.

### BACKGROUND ART

An air conditioning circuit of a vehicle comprises a compressor, a condenser, an expansion system, an evaporator and fluidic assembly for connecting the previously mentioned components to one another.

In particular, the evaporator is crossed by an air current which is fed by means of specific ducts into the passenger compartment and the compressor may be arranged either in the front or in the back of the engine compartment.

The compressor supplies work to take a fluid from a relatively low temperature and pressure, e.g. 2°C and 2 bars respectively, to a higher pressure and temperature, e.g. 80°C and 15 bars.

The fluid gives heat to the outer environment in the condenser and is directed towards the evaporator, an expansion valve causing a pressure drop being interposed, until the fluid evaporates in the evaporator thus subtracting heat from the air flow which crosses it and which is conveyed into the passenger compartment.

Downstream of the evaporator, the compressor should supply work to the fluid equal to the enthalpy difference between suction and delivery. In order to make the refrigerating cycle more efficient and reduce polluting emissions, it is known to implement a heat exchanger in which the fluid exiting from the evaporator is heated by the fluid exiting from the condenser. Thereby, the fluid aspirated by the compressor has a higher pressure and temperature, and the enthalpy difference and thus the work of the compressor decrease.

In the case of a circuit having the compressor arranged in a front position within the engine compartment, the fluidic assembly ducts are arranged side by side along most of the path within the engine compartment and the exchanger has an elongated shape which follows the path of the ducts themselves.

Heat exchangers are known, comprising a main body for feeding both the refrigerating fluid to be heated and the heating fluid, and a pair of connectors mounted at respective ends of the main body for connecting the heat exchanger to the appropriate ducts of the air conditioning circuit.

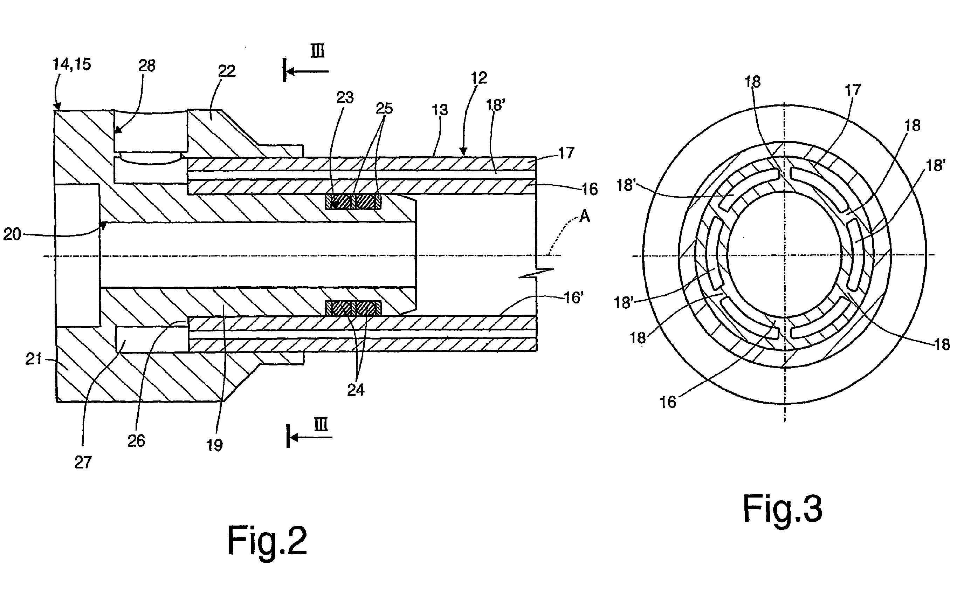

The main body defines a central duct and a plurality of peripheral ducts surrounding the central duct. The central duct is defined by a tubular wall. The peripheral ducts are defined in the radial direction by the tubular wall of the central duct and by an outer tubular wall which is concentrical to the tubular wall of the central duct and, in the circumferential direction, by a plurality of angularly equidistant rectilinear partitions (see figure 3).

The central duct feeds the refrigerating fluid from the evaporator directed towards the compressor suction, and the peripheral ducts back-flow feed the refrigerating fluid exiting from the condenser.

In particular, the main body is made by extrusion and may then be folded to adapt to the space available inside the engine compartment.

A connector for a main body made by extrusion currently comprises a metal block defining a connecting port for one end from the main body, a port for the low-temperature refrigerating fluid and a port for the high-temperature refrigerating fluid.

For assembling the known connector, the main body should be machined by stock removing. Both the tubular wall and the partitions are removed along an axial end length. The tubular wall of the central duct is thus uncovered and inserted into the connector. The connecting port of the connector is shaped so as to fluidically connect the central duct to the low-temperature fluid port, and the peripheral ducts to the high-temperature, refrigerating fluid port.

The removal of a portion of outer tubular wall and partitions is a complex operation to be performed and requires carefully cleaning the main body from scraps so as to avoid the main body itself from being contaminated by solid particles having dimensions which could obstruct the expansion assembly and the peripheral ducts, thus compromising the operation of the air conditioning circuit.

DE102007054732 discloses a heat exchanger having a connector soldered to an integral heat exchanging body. Soldering provide for slid tight connection and mechanical connection and, in case of leakage, the unit as a whole is scrapped.

### DISCLOSURE OF INVENTION

It is the object of the present invention to provide a heat exchanger for an air conditioning circuit of a motor vehicle which is free from the above-specified drawbacks.

The object of the present invention is achieved by a heat exchanger according to claim 1.

### BRIEF DESCRIPTION OF THE DRAWINGS

For a better understanding of the present invention, it will be further described with reference to the accompanying drawings, in which:
- figure 1 is a perspective view of a fluidic assembly which connects the main components of an air conditioning circuit to one another, and comprises an exchanger according to the present invention;
- figure 2 is a partial axial section of a fitting of a tubular, concentrical heat exchanger according to the present invention;
   figure 3 is a section taken along line III-III in figure 2; and
- figure 4 is a partial axial section of a second embodiment of the present invention.

### BEST MODE FOR CARRYING OUT THE INVENTION

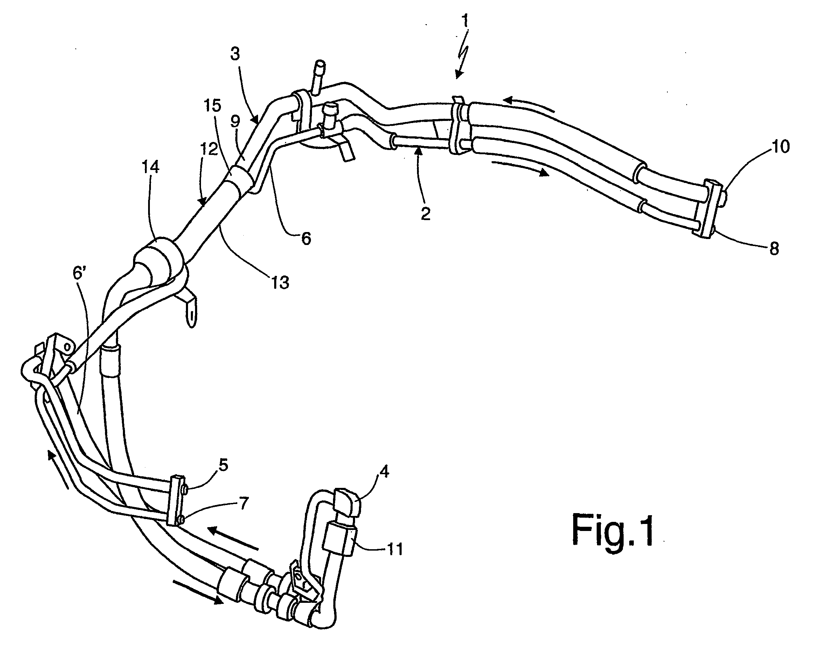

In figure 1, numeral 1 shows as a whole a fluidic assembly for an air conditioning system of a motor vehicle, comprising a high-pressure line 2 for feeding a refrigerating fluid between the delivery of a compressor and an expansion valve (not shown), and a low-pressure line 3 to feed a refrigerating fluid from the expansion valve to the compression suction (not shown).

In particular, the high-pressure line 2 comprises metal and rubber ducts mounted in series, a fitting 4 adapted to be connected to the delivery of a compressor, a fitting 5 connected to the inlet of a condenser, and a tube 6' between the fittings 4 and 5. Furthermore, the high-pressure line 2 comprises a line 6 for connecting the condenser to an expansion valve (not shown). Line 6 comprises a fitting 7 adapted to be connected to the outlet of the condenser and a fitting 8 adapted to be connected to the expansion valve.

The low-pressure line 3 comprises a line 9 having a fitting 10 adapted to be connected to the outlet of an evaporator (not shown) and a fitting 11 adapted to be connected to an inlet of the compressor.

The ducts of lines 2, 3 comprise at least one layer of a barrier material for preventing the normally very volatile refrigerating fluid from being permeated. For example, the material may be aluminium or polyamide 6.10. In the case of a carbon dioxide system, the pipes are made of steel.

The refrigerating fluid flowing in line 9 is at a low temperature and is heated by the refrigerating fluid flowing along line 6 to the condenser outlet. For this purpose, the fluidic assembly 1 comprises a heat exchanger 12 comprising a main body 13 and a pair of connectors 14, 15 for fluidically and mechanically connecting the main body to the lines 6 and 9.

For conciseness_purposes, figure 2 shows a single end portion of the exchanger 12, it being understood that the other end portion is identical to the one shown.

The main body of the exchanger 12 comprises a tubular wall 16 having an axis A, an outer tubular wall 17 which is concentrical to the tubular wall 16 and a plurality of radial partitions 18, all in a single body.

The tubular wall 16 defines a duct 16' belonging to the line 9 to feeding refrigerating fluid from the evaporator outlet to the compressor suction. The tubular wall 16, the outer tubular wall 17 and the partitions 18 radially and circumferentially define, respectively, a plurality of ducts 18' arranged parallel to one another and belonging to line 6 for feeding refrigerating fluid between the condenser outlet and the expansion valve. According to a preferred embodiment of the present invention, the main body 13 is made by extrusion.

The connector 14 preferably comprises a tubular portion 19 defining a through duct 20, a head 21 radially exiting from the tubular portion 19 and a sleeve 22 connected to a peripheral edge of the head 21 and surrounding the tubular portion 19, all in a single body.

In particular, portion 19 defines both an annular seat 23 for housing a pair of sealing rings 24 and corresponding spacer rings 25 and a shoulder 26 for defining the relative axial position of the connector 14 with respect to the main body 13.

The sealing rings 24 and the spacers 25 define a fluid-tight seal with an inner surface of the tubular wall 16 to avoid the refrigerating fluid from leaking from the high-pressure line 6 towards the low-pressure line 9.

The shoulder 26 is spaced apart from an inner surface of the head 21 and, when the connector 14 is mounted on the main body 13, head 21, a portion of sleeve 22, a portion of the tubular wall axially comprised between the head 21 and a shoulder 26 and the main body 13 delimit an annular chamber 27.

The ducts 18' lead into the annular chamber 27 which is connected to line 6 by means of a radial port 28 defined by the sleeve 22.

When the shoulder 26 axially comes in contact with the main body 13, the sealing rings 24 define the fluidic seal on the inner surface of the tubular wall 16 and the sleeve 22 comes in contact with an outer surface of the outer tubular wall 17.

Sleeve 22 is rigidly fixed to the outer tubular wall 17 by means of an either low-temperature or cold connection, so as not to damage the sealing rings 24 which are already in a contact position with the inner surface of the tubular wall 16 when the fixing operation is to be performed, and may not be mounted at a later time.

In particular, the fixing operation is performed by acting only on the outer tubular wall 17 and without acting on the tubular wall 16, which substantially has the same length as the outer tubular wall 17.

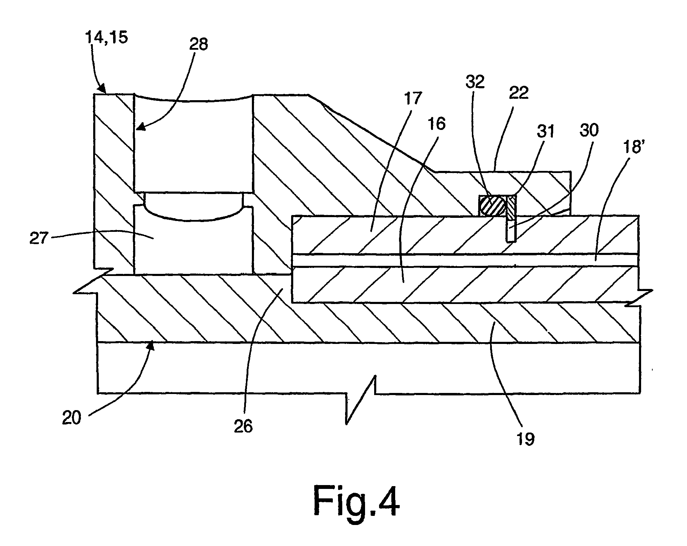

For example, the fixing operation is performed either by magnetically welding or crimping the lip of sleeve 22 or by means of a snapping connection with an elastic retaining ring and a seal, as shown in figure 4.

The aforesaid fixing methods may also be combined in series to improve the fitting tightness, e.g. by using a sealing adhesive and crimping the lip of sleeve 22.

In particular, according to the embodiment shown in figure 4, the outer tubular wall 17 defines a seat 30 in which an elastic retaining ring 31 is housed.

Sleeve 22 also has an annular seat facing the outer tubular wall 17, within which both the elastic retaining ring 31 and a sealing ring 32 are housed to avoid the refrigerating fluid from leaking to the external environment.

The advantages of the heat exchanger implemented according to the present invention are apparent from the description provided with reference to the accompanying drawings.

The connector 14, 15 may be mounted on the main body 13, 14 without stock removing operations on tubular wall 17 and partitions 18. In particular, this result is achieved by the shape of the connector which fluid-sealingly surrounds the outer tubular wall 17 by means of sleeve 22 and internally comes in contact with the inner tubular wall 16 by means of the tubular portion 19. In particular, no stock removing operations which completely remove the outer tubular wall 17 are carried out. Seats for elastic rings or sealing rings may be made instead.

The main body 13 may be further connected to the lines 6, 9 by minimum or null interventions on the main body 13.

The assembling operation is rapid and the fixing operation may be easily automated. Furthermore, if the main body 13 is made by extrusion, the excessively broad machining tolerances require a step of calibrating the outer tubular wall 17 before the connector 15 is mounted. This calibration may be carried out without cutting the tubular walls themselves and is generally performed by plastic deformation.

The connector 14, 15 may be entirely made by plastic deformation with great advantages in terms of times and costs.

It is finally apparent that changes and variations may be made to the present invention without departing from the scope of protection defined by the appended claims.

The connector 14, 15 may be obtained in a single body by impact extrusion or by die-casting.

The connector 14, 15 may be adapted to many types of connection with line 9. For example, the connection may be of frontal seal washer type, as shown in the figures. Alternatively, the connector 14, 15 may comprise, preferably in only one body, the male element of either a quick coupling or a threaded connection. Such a male element is coaxial to the axis A and protrudes with respect to the head 21 from the axial side opposite to the tubular portion 19.

## Claims

1. A heat exchanger (12) for an air conditioning circuit of a motor vehicle, comprising a single body (12) defining a central duct (16') having an axis (A) and a plurality of peripheral ducts (18') surrounding said central duct (16') and having substantially the same length of the latter, and at least one connector (14; 15) defining a first port (20) fluidically connected to said central duct (16') and a second port (28) fluidically connected to said peripheral ducts (18') so that said central duct (16') and said peripheral ducts (18') are fluidically insulated, wherein said connector (14; 15) comprises a tubular portion (19) which is fluid-sealingly housed within said central duct (16') and fluidically connected with said first port (20) and defines a chamber (27) fluidically connected between said peripheral ducts (18') and said second port (28), and wherein said connector (14; 15) further comprises a sleeve (22) concentric and integral to said tubular portion (19) and surrounding an outer wall (17) of said body (12), **characterized in that** said sleeve (22) bein rigidly connected by means of an either low-temperature or cold connection to said outer wall (19), sealing rings (23) and spacers (25) housed in a seat (23) of said tubular portion (19) defining the sealed connection of said tubular portion (19) within said central duct (16').

2. The heat exchanger according to claim 1, **characterized in that** said first port (20) is concentrical to said tubular portion (19) and **in that** said second port (28) is arranged radially.

3. The exchanger according to claim 2, **characterized in that** said chamber (27) is defined in a radial direction at least by said tubular portion (19) and by said sleeve (22).

4. The heat exchanger according to any one of the preceding claims, **characterized in that** said sleeve (22) is snap-fitted to said outer wall (17) and **in that** it comprises sealing means (32) interposed between said outer wall (17) and said sleeve (22).

5. The heat exchanger according to claim 4, **characterized in that** said sleeve (22) is snap-fitted to said outer wall (17) via an annular elastic ring (31).

6. The heat exchanger according to claim 5, **characterized in that** both said elastic ring (31) and said sealing ring (32) are housed in the same seat (30).

7. The heat exchanger according to any of the preceding claims, **characterized in that** said connector (14; 15) is made by plastic deformation.

8. The heat exchanger according to any of the claims 1 to 3, **characterized in that** said connector (14; 15) is rigidly connected (14; 15) to said body (12) by means of a process selected among crimping and a magnetic welding.

9. A heat exchanger according to any of the preceding claims, **characterized in that** said body (12) is manufactured by extrusion.

10. A fluidic assembly for connecting at least two among a compressor, an evaporator, an expander assembly and a condenser of an air-conditioning circuit of a motor vehicle, **characterized in that** it comprises an exchanger according to any of the preceding claims.

11. An air conditioning circuit for a motor vehicle comprising an exchanger according to any of claims 1 to 79.

## Patentansprüche

1. Wärmeaustauscher (12) für einen Luftklimatisierungskreislauf eines Kraftfahrzeugs, umfassend einen Einzelkörper (12), welcher einen zentralen Kanal (16') mit einer Achse (A) und eine Vielzahl von peripheren Kanälen (18'), welche den zentralen Kanal (16') umgeben und im Wesentlichen die selbe Länge wie der zentrale Kanal (16') haben, definiert, und wenigstens ein Verbindungsstück (14; 15), welches einen ersten Anschluss (20), fluidverbunden mit dem zentralen Kanal (16'), und einen zweiten Anschluss (28), fluidverbunden mit den peripheren Kanälen (18'), derart definiert, dass der zentrale Kanal (16') und die peripheren Kanäle (18') fluidisoliert sind, wobei das Verbindungsstück (14; 15) einen röhrenförmigen Abschnitt (19) umfasst, welcher fluiddicht im zentralen Kanal (16') aufgenommen und mit dem ersten Anschluss (20) fluidverbunden ist und eine Kammer (27), fluidverbunden zwischen den peripheren Kanälen (18') und dem zweiten Anschluss (28), definiert, und wobei das Verbindungstück (14, 15) weiter eine Manschette (22) umfasst, welche konzentrisch um und integriert in den röhrenförmigen Abschnitt (19) ist und eine Außenwand (17) des Einzelkörpers (12) umgibt, **dadurch gekennzeichnet, dass** die Manschette (22) steif mit der Außenwand (19) mittels entweder einer Niedrigtemperatur- oder Kaltverbindung verbunden ist, und dadurch, dass Dichtungsringe (23) und Abstandsstücke (25), aufgenommen in eine Aufnahmefläche (23) des röhrenförmigen Abschnittes (19), die dichte Verbindung des röhrenförmigen Abschnitts (19) innerhalb des zentralen Kanals (16') definieren.

2. Wärmeaustauscher gemäß Anspruch 1, **dadurch gekennzeichnet, dass** der erste Anschluss (20) konzentrisch um den röhrenförmigen Abschnitt (19) ist, und dadurch, dass der zweite Anschluss (28) radial angeordnet ist.

3. Wärmeaustauscher gemäß Anspruch 2, **dadurch gekennzeichnet, dass** die Kammer (27) in einer radialen Richtung wenigstens durch den röhrenförmigen Abschnitt (19) und durch die Manschette (22) definiert ist.

4. Wärmeaustauscher gemäß einem beliebigen der vorhergehenden Ansprüche, **dadurch gekennzeichnet, dass** die Manschette (22) schnappverbunden mit der Außenwand (17) ist, und dadurch, dass sie Dichtungsmittel (32), eingefügt zwischen der Außenwand (17) und der Manschette (22), umfasst.

5. Wärmeaustauscher gemäß Anspruch 4, **dadurch gekennzeichnet, dass** die Manschette (22) schnappverbunden mit der Außenwand (17) über einen ringförmigen elastischen Ring (31) ist.

6. Wärmeaustauscher gemäß Anspruch 5, **dadurch gekennzeichnet, dass** sowohl der elastische Ring (31) und der Dichtungsring (32) in derselben Aufnahmefläche (30) aufgenommen sind.

7. Wärmeaustauscher gemäß einem beliebigen der vorhergehenden Ansprüche, **dadurch gekennzeichnet, dass** das Verbindungsstück (14; 15) durch plastische Deformation hergestellt ist.

8. Wärmeaustauscher gemäß einem beliebigen der Ansprüche 1 bis 3, **dadurch gekennzeichnet, dass** das Verbindungsstück (14; 15) steif verbunden (14; 15) mit dem Einzelkörper (12) mittels eines Verfahrens, ausgewählt aus Klemmverbindung und Magnetschweißen, verbunden ist.

9. Wärmeaustauscher gemäß einem beliebigen der vorhergehenden Ansprüche, **dadurch gekennzeichnet, dass** der Einzelkörper (12) durch Extrudieren hergestellt ist.

10. Fluidanordnung zur Verbindung wenigstens zweier aus einem Kompressor, einem Verdunster, einer Expanderanordnung und einem Verflüssiger eines Luftklimatisierungskreislaufs eines Kraftfahrzeugs, **dadurch gekennzeichnet, dass** sie einen Austauscher gemäß einem beliebigen der vorhergehenden Ansprüche umfasst.

11. Luftklimatisierungskreislauf für ein Kraftfahrzeug, umfassend einen Austauscher gemäß einem beliebigen der Ansprüche 1 bis 9.

## Revendications

1. Echangeur thermique (12) destiné à un circuit de conditionnement d'air d'un véhicule à moteur, comprenant un seul corps (12) définissant un conduit central (16') présentant un axe (A) et une pluralité de conduits périphériques (18') entourant ledit conduit central (16') et présentant globalement la même longueur que ce dernier, et au moins un connecteur (14 ; 15) définissant un premier orifice (20) connecté en communication de fluide audit conduit central (16') et un deuxième orifice (28) connecté en communication de fluide auxdits conduits périphériques (18') de sorte que ledit conduit central (16') et lesdits conduits périphériques (18') ne sont pas en communication de fluide, où ledit connecteur (14 ; 15) comprend une partie tubulaire (19) qui est logée de manière à être étanche au fluide à l'intérieur dudit conduit central (16') et est connectée en communication de fluide audit premier orifice (20) et définit une chambre (27) connectée en communication de fluide entre lesdits conduits périphériques (18') et ledit deuxième orifice (28), et où ledit connecteur (14 ; 15) comprend en outre un manchon (22) concentrique par rapport à ladite partie tubulaire (19) et solidaire avec celle-ci et entourant une paroi extérieure (17) dudit corps (12), **caractérisé en ce que** ledit manchon (22) est connecté de manière rigide au moyen d'une connexion soit froide soit à faible température à ladite paroi extérieure (19), rendant étanches des bagues (23) et des éléments d'espacement (25) logés dans un siège (23) de ladite partie tubulaire (19) définissant la connexion rendue étanche de ladite partie tubulaire (19) à l'intérieur dudit conduit central (16').

2. Echangeur thermique selon la revendication 1, **caractérisé en ce que** ledit premier orifice (20) est concentrique par rapport à ladite partie tubulaire (19) et **en ce que** ledit deuxième orifice (28) est agencé de manière radiale.

3. Echangeur thermique selon la revendication 2, **caractérisé en ce que** ladite chambre (27) est définie dans une direction radiale au moins par ladite partie tubulaire (19) et par ledit manchon (22).

4. Echangeur thermique selon l'une quelconque des revendications précédentes, **caractérisé en ce que** ledit manchon (22) est emboîté sur ladite paroi extérieure (17) et **en ce qu'**il comprend un moyen d'étanchéité (32) intercalé entre ladite partie extérieure (17) et ledit manchon (22).

5. Echangeur thermique selon la revendication 4, **caractérisé en ce que** ledit manchon (22) est emboîté sur ladite paroi extérieure (17) par l'intermédiaire d'une bague élastique annulaire (31).

6. Echangeur thermique selon la revendication 5, **caractérisé en ce que** ladite bague élastique (31) et ladite bague d'étanchéité (32) sont toutes deux logées dans le même siège (30).

7. Echangeur thermique selon l'une quelconque des revendications précédentes, **caractérisé en ce que** ledit connecteur (14 ; 15) est fabriqué par déformation plastique.

8. Echangeur thermique selon l'une quelconque des revendications 1 à 3, **caractérisé en ce que** ledit connecteur (14 ; 15) est connecté de manière rigide (14 ; 15) audit corps (12) au moyen d'un procédé sélectionné parmi un sertissage et un soudage magnétique.

9. Echangeur thermique selon l'une quelconque des revendications précédentes, **caractérisé en ce que** ledit corps (12) est fabriqué par extrusion.

10. Ensemble fluidique destiné à connecter au moins deux éléments parmi un compresseur, un évaporateur, un ensemble de dilatation et un condenseur d'un circuit de conditionnement d'air d'un véhicule à moteur, **caractérisé en ce qu'**il comprend un échangeur selon l'une quelconque des revendications précédentes.

11. Circuit de conditionnement d'air destiné à un véhicule à moteur comprenant un échangeur selon l'une quelconque des revendications 1 à 9.
